(19) Europäisches Patentamt
European Patent Office
Office européen des brevets

(11) Publication number: 0 395 113 A2

# (12) EUROPEAN PATENT APPLICATION

(21) Application number: **90108124.0**

(51) Int. Cl.[5]: **G02F 1/137**

(22) Date of filing: **27.04.90**

(30) Priority: **27.04.89 JP 108415/89**

(43) Date of publication of application: **31.10.90 Bulletin 90/44**

(84) Designated Contracting States: **DE FR GB**

(71) Applicant: **SEIKO INSTRUMENTS INC.**
**31-1, Kameido 6-chome Koto-ku**
**Tokyo 136(JP)**

(72) Inventor: **Yamamoto, Shuhei, Seiko Instruments Inc.**
**31-1, Kameido 6-chome, Koto-ku**
**Tokyo(JP)**
Inventor: **Kato, Naoki, Seiko Instruments Inc.**
**31-1, Kameido 6-chome, Koto-ku**
**Tokyo(JP)**
Inventor: **Ebihara, Teruo, Seiko Instruments Inc.**
**31-1, Kameido 6-chome, Koto-ku**
**Tokyo(JP)**

(74) Representative: **Fleuchaus, Leo, Dipl.-Ing. et al**
**Melchiorstrasse 42**
**D-8000 München 71(DE)**

## (54) Laser writing type liquid crystal light valve.

(57) A liquid crystal light valve cell has two optically different states switchable therebetween by DC voltage in response to laser beam. A ferroelectric liquid crystal layer is sandwitched by a pair of front and rear alignment layers to establish the two stable states of bistable state in the ferroelectric liquid crystal layer. The threshold voltage values of bistable state depend on temperature of the liquid crystal. A front electrode layer is disposed on the front alignment layer. An optically reflecting layer is disposed on the rear alignment layer. A laser beam absorbing layer is disposed on the reflecting layer and absorbs thurmal energy of laser beam irradiated. A rear electrode layer is disposed on the laser beam absorbing layer in cooperation with the front electrode layer to apply the DC voltage such that effective DC voltage is applied across the liquid crystal layer to thereby effect the switching between the two stable states.

FIG. 1

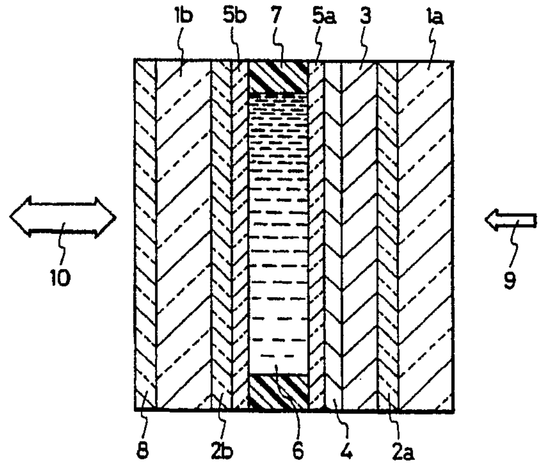


EP 0 395 113 A2

# LASER WRITING TYPE LIQUID CRYSTAL LIGHT VALVE

## BACKGROUND OF THE INVENTION

### 1. Field of the Invention

The present invention relates to liquid crystal light valves which are activated optically to effect writing image information by irradiating laser beams, and which are utilized for intermediate recording medium of optical printer, graphic display device, light shutter, image processing device, optical information processing system and so on.

### 2. Description of the Prior Art

There are known laser writing type liquid crystal light valves which have a laser beam absorbing film and a liquid crystal. The known light valves utilize a n type nematic liquid crystal, a n type nematic/cholesteric mixing liquid crystal, a p type smectic liquid crystal or a n type smectic liquid crystal in the liquid crystal. Particularly, the light valve which uses the smectic liquid crystal has a high resolution and a good contrast, whereby it is utilized as a large picture projection display unit or a soft plotter for CAD and CAM.

In the case of using the p type smectic liquid crystal, this liquid crystal is sandwiched in between a pair of transparent electrode substrates each undergoing adequate processing of alignment or in between a substrate including a laser beam absorbing film coated on one transparent electrode and the transparent electrode substrate, thus manufacturing the liquid crystal light valve. The liquid crystal molecules are subjected to a regulating force of the alignment film in an initial state, and the liquid crystal layer is transparent.

Heat of the laser beams with which the liquid crystal light valve is irradiated is, when providing no laser beam absorbing layer, transferred directly to the liquid crystal layer to heat it up, thereby bringing the liquid crystal of the portions irradiated with the laser beams into a liquid phase. Where the laser beam absorbing layer is formed, however, the heat transfer is effected after the laser beam absorbing layer has locally been heated up.

Thereafter, the portions irradiated with the laser beams are quenched and revert to the original smectic phase after taking off the laser beams, and it follows that such portions are held in an light scattering mode. In consequence, the necessary image information is written to the liquid crystal light valve and stored therein.

The picture as a whole can be erased by applying an AC electric field of several tens KV/cm to the liquid crystal light valve or by quenching the liquid crystal light valve to assume tha liquid phase or the nematic phase after performing the heating process under such condition that an AC bias voltage is applied thereon. The picture is partially erasable by scanning the laser beams in a state where the AC bias voltage is applied.

On the occasion of employing the n type smectic liquid crystal, the constitution of the light valve is fundamentally the same as that in using the p type smectic liquid crystal. It is practicable to effect an overheating/quenching write process by irradiation of laser beams, an entire erasion by applying a high electric field of several tens KV/cm and a partial erasion by increasing a temperature up to the liquid phase by laser beam scanning at a low velocity and by gradual cooling down to the smectic phase.

The laser writing type liquid crystal light valve which uses the above-described smectic liquid crystal is capable of writing hyperfine pixels of approximately 10 µm and also images with a high resolution to store them. This light valve exhibits a relatively favorable value of contrast of 1 : 20 to 1 : 50.

There arise, however, the following problems inherent in the liquid crystal light valve using the foregoing smectic liquid crystal. Energy of 10 µJ through 20 µJ is required to writing one pixel. With a small-sized low output semiconductor laser of GaAlAs serving as a writing source, a writing time of 10 µsec to 50 µsec is needed per pixel. For this reason, when writing (1000 x 1000) pixels, it takes 10 minutes even at a velocity of 10 µsec/pixel and 50 minutes at a velocity of 50 µsec/pixel. This is far from the utilization thereof. If a large output laser of Ar or YAG is employed, writing can be carried out at a speed of approximately 1 µsec/pixel. This in turn, however, causes defects in which a cooler is required, and the device is remarkably enlarged in size on the whole.

The aforementioned light valve shows a relatively good contrast value of 1 : 20 through 1 : 50. Where the light valve is utilized as a display unit on which the image written is projection-displayed, the function thereof can substantially be fulfilled. When using the light valve in the form of a space modulator for processing parallel optical information or an optical shutter catered for a color laser printer, the contrast is insufficient. This conduces to a reduction in S/N ratio when being used for processing the optical information, which causes errors. The use for the color laser printer obviously presents a problem of creating color fogging due to a crosstalk.

## SUMMARY OF THE INVENTION

An object of the present invention is to provide an improved liquid crystal light valve having a laser beam absorbing layer which can locally absorbe thermal energy upon irradiation of laser beam, and a ferroelectric liquid crystal layer which has a optically bistable state having different threshold valtages depended upon its temperature.

Another object of the present invention is to establish the bistable state of the ferroelectric liquid crystal composed, for example, of mixture of ester type smectic C phase liquid crystal composition and added optically active substance by using an alignment layer formed by, for example, oblique evaporation of silicon monooxide.

Further object of the present invention is to provide a laser writing type liquid crystal light valve which writes and memorizes an image with a high resolution in a high contrast at a high speed by scanning a laser beam.

According to the present invention, molecules of the ferroelectric liquid crystal are aligned uniformly in a direction substantially along the layer of the liquid crystal with a proper pre-tilt angle between the axis or derector of molecules and the plane of layer according to binding force of the alignment layer is contact with the liquid crystal layer. Further, this binding force due to interaction at the boundary between the alignment layer and the liquid crystal layer is relatively weak so that the bound molecules can angularly move or switch between the two stable states of the bislable state upon application of opposite polarity voltage across the liquid crystal layer to thereby maximize the angular distance or cone angle between the two stable states to increase the optical contrast between the two stable states of the bistable state.

The ferroelectric liquid crystal has different threshold voltage values effective to switch between the two stable states. The threshold voltage values consist of a first threshold voltage to switch to one stable state from the other stable state and a second threshold voltage to switch to the other stable state from one stable state. The first threshold voltage has a opposite polarity of the second threshold voltage. The threshold voltage values depend on temperature of the liquid crystal. When the temperature rises higher, the threshold voltage values become smaller.

The laser beam absorbing loyer is formed by evaporating a chromium (Cr), a nickel-chromium alloy, a tantalum (Ta), a tungsten (W), a tellurium (Te), a hydrogenated amorphous silicon (a-Si:H) or the like, and absorbes effectively thurmal energy upon irradiation of the laser beam so that the portion of the liquid crystal irradiated is heated effectively.

In oparation, the light valve is firstly preset to one stable state of th£ bistable state. The presetting is carried out by applying a DC voltage sufficiently greater than the first threshold voltage value to set the molecules of the ferroelectric liquied crystal into one stable state to thereby hold or memorize that state.

After the presetting operation, the light valve is applied with a DC voltage having the opposite polarity to the presetting DC voltage and a magnitude smaller than the second threshold voltage, while the light valve is irradiated selectively or locally with scanned laser beam. By such operation, the portion of the laser beam absorbing layer corresponding to the irradiated region absorbs thurmal energy and the portion of the liquid crystal layer corresponding to the irradiated region is heated up so as to reduce the threshold voltage value in the irradiated region to thereby apply a effective voltage across portion of the liquied crystal layer corresponding to the irradiated region. The effective voltage is effective to reverse the preset state to the other state due to the angular movement of ferroelectric liquid crystal molecules caused by the reverse rotation of spontaneous polarization thereof.

So that the light valve is writen an image information having the other state into the background of preset state and holds the image information after removing the laser beam.

After writing the image information on the light valve, the light valve may be irradiated with reading light linearly polarized in a direction parallel (or parpendicular) to the C director of molecules held in the other state, and the reflected reading light reflected by a reflecting layer disposed at the back of light valve is analyzed by an analyzer having polarization axis parpendicular (or paralled) to the polarization direction of reflected reading light to thereby project the image information on a screen.

## BRIEF DESCRIPTION OF THE DRAWINGS

Fig. 1 is a schematic cross sectional view of the laser writing type liquid crystal light valve according to the present invention;

Fig. 2 is an enlarged sectional view of an alignment layer used in the inventive light valve;

Fig. 3 and Fig. 4 are diagrams showing the relation between the applied voltage and light reflectivity of the invention light valve;

Fig. 5 is a diagram showing the waveform of the applied voltage for measuring the characteristic of Fig. 4;

Fig. 6 is a diagram showing the waveform of the applied voltage for driving the invention light valve;

Fig. 7 is a schematic structural view of digital color laser printer applied with the inventive light valve;

Fig. 8 is an enlarged sectional view of image medium used in the digital color laser printer of Fig. 7;

Fig. 9 is a schematic structural view of optical disc memory device applied with the inventive light valve; and

Fig. 10 is a prospective view showing the operation state of optical disc memory device of Fig. 9.

## DETAILED DESCRIPTION OF THE INVENTION

Hereinafter, the present invention will be described in detail in conjunction with the attached drawings.

Fig. 1 shows a structural sectional view of the laser writing type liquid crystal light valve according to the present invention. The inventional light valve is characterized in that a ferroelectric liquid crystal, which exhibites an apparent bistability between a light reflectivity and an applied voltage, is utilized in a liquid crystal layer.

A pair of rear and front transparent substrates 1a and 1b are made of glass or plastic are connected to each other by means of an outer periphery seal 7 to form a light valve cell for accommodating therein a liquid crystal layer 6 composed of ferroelectric liquid crystal molecules. The front substrate 1b is formed on its inner face sequentially with a transparent electrode layer 2b and an alignment layer 5b. The alignment layer 5b is formed by oblique evaporation of silicon monooxide in the angular direction of 75 to 85 degrees relative to the normal of substrate 1b. The rear substrate 1a is also formed on its inner face with another transparent electrode layer 2a and another alignment layer 5a which is formed in a manner similar to the alignment layer 5b.

The pair of substrates 1a and 1b are opposed in controlled space relation to each other such that the pair of alignment layers 5a and 5b are disposed in contact with the interposed liquid crystal layer 6 at opposite side thereof.

Further, a laser beam absorbing layer 3 and a light reflecting layer 4 are sequentially interposed between the transparent electrode layer 2a and the alignment layer 5 in multi-layer structure on the inner face of rear substrate 1a. On the other hand, the front substrate 1b is formed on its outer face with a non-reflective coating layer 8.

According to such structure of the light valve, a laser beam 9 is irradiated onto the light valve from the outer face of the rear transparent substrate 1a to write image pattern into the liquid crystal layer 6 composed of ferroelectric liquid crystal molecules, and a reading or projecting light 10 is irradiated onto the light valve from the outer face of the front transparent substrate 1b to read out or project the image pattern written in the liquid crystal layer 6.

Fig. 2 shows an enlarged sectional structure of the alignment layers 5a, 5b produced by the oblique evaporation of silicon monooxide.

The alignment layer has column structure comprised of tiny columns 21 inclined correspondingly to the oblique evaporation angle. The column structure is effective to align the ferroelectric liquid crystal molecules.

Since the polar interaction is small between the silicon monooxide of alignment layer and the molecules of ester type ferroelectric liquid crystal at the boundary therebetween in the above described moleclar alignment system, the molecules which have spontaneous dipole moment are not strongly bound by the polar interaction at the boundary, and are uniformly pre-tilted with respect to the alignment layer due to the inclined column structure of alignment layer. Such inclined column structure is carried out at a suitable evaporation angle between 75 to 85 degrees.

When the angle of oblique evaporation is below 75 degree relative to the nomal of substrate, a groove structure is formed instead of the inclined column structure. The liquid crystal molecules are aligned and held along the groove structure, hence the molecules can not be pre-tilted.

Moreover, since the molecules are strongly bound in the groove structure at the boundary, one of the two stable states has lower potential energy than that of the other stable state, and therefore it is difficult to establish potentially equivalent bistable state.

When the angle of oblique evaporation is above 85 degree, which means the evaporated particles enters into the surface of substrate almost in parallel thereto, an irregular uneven micro structure is formed instead of the inclined column structure. The uneven structure can not produce pre-tilted alignment of the molecules and therefore can not establish effective bistable state in the ferroelectric liquid crystal layer.

Now, a first embodiment will be explained.

A pair of rear and front transparent substrates 1a, 1b are made of glass substrate. The rear transparent substrate 1a is formed on its inner surface a chrome metal thin film for the transparent electrode layer 2a, the laser beam absorbing layer 3 and the light reflecting layer 4 at thickness of 1500Å. The front transparent substrate 1b is formed on its inner surface the transparent electrode layer 2b. The alignment layers 5a, 5b are formed by oblique

evaporation of silicon monooxide in the angular direction of 82 degree relative to normal of substrate at thickness of 2000Å which is mesured by a film thickness gauge set along the evaporation direction.

The pair of substrates 1a, 1b are coupled to eachother with facing the respective alignment layers 5a, 5b to each other by means of the outer periphery seal 7 composed of adhesive confaining chip of glass fiber having diameter of about 1.5 µm effective to control the spacing between the pair of substrates.

The ferroelectric liquid crystal composition is introduced into the spacing to form the liquid crystal layer

6. The ferroelectric liquid crystal composition may be compose of mixture of ester type SmC liquid crystal materials added with optically active material. For example, the mixture is comprised of 4-((4′-octyl) phenyl) benzoic acid (3″-fluoro, 4″-octyloxy) phenyl ester:

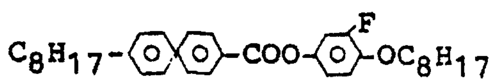

and 4-((4′-octyloxy)phenyl) benzoic acid (3″fluoro, 4″-octyloxy) phenyl ester:

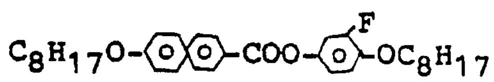

at the ratio of 1:1. The optially active material may be composed of 5-octyloxynaphtalene carboxylic acid 1′-cyanoethyl ester:

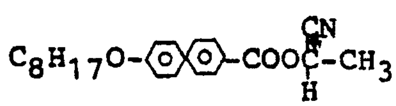

Which is added to the mixture by weight of 25% to form the ferroelectric liquid crystal composition.

Fig. 3 shows the change of light a reflectivity of the first embodiment when applying different varying voltage between the electrode layer 2b and the chrome metal thin film under non-irradiation of the laser beam.

The numeral 31 in the Fig. 3 indicates a voltage-light reflectivity characteristic at 25° C.

The numerals 32 and 33 show the characteristics at 40° C and 50° C, respectively. The applied voltage is a triangular voltage wave form of 0.1Hz and 20Vp-p. The laser writing type liquid crystal light valve exhibits a good bistability between the light reflectivity and the applied voltage from 25° c to 40° c and has a clear threshold characteristic.

In the vicinity of 50° C, however, the bistability almost disappears, and the liquid crystal molecules remarkably decrease in threshold voltage with a decline of viscosity.

For instance, the liquid crystal molecules are held in a uniform alignment all over the surface of the light valve by applying a DC voltage exceeding a first threshold voltage $Vth_1$34 at 25° C.

Subsequently, a DC voltage 36 having polarity opposite to the first threshold voltage $Vth_1$34 and magnitude smaller than a second threshold voltage $Vth_2$35 is applied to the electrode layer 2b and the chrome metal this film. Even in such a case, the liquid crystal molecules remain as they are, in which state the irradiation of the laser beam is carried out.

The liquid crystal molecules of the portions irradiated with laser beams increase in temperature depending on an intensity of laser beams, a specific volume and an absorptive efficiency of the laser absorbing film, and a specific volume of the liquid crystal molecules, and exhibit the applied voltage-light reflectivity characteristic corresponding to a temperature at that time.

Now, supposing that the liquid crystal of the portions irradiated with laser beams rises from room temperature up to 50° C due to the irradiation of laser beams, the applied voltage-light reflectivity characteristic of the liquid crystal light valve at that temperature takes a form indicated by 33. The DC voltage 36 applied at that time is greater than a threshold voltage 38 of the form 33. Therefore, the liquid crystal molecules rotate on the cone, and there is made a polarizing inversion to a position opposite to the molecular alignment in the initial state, thus assuming a state indicated by 38. When removing the laser, the liquid crystal molecules of the portions irradiated with laser beams are cooled down quickly, thereby taking the state 38 of a hysteresis loop of 31 at room temperature. As a result, the information required is written in the state 38 against a state-background of a state 40 at room temperature and then stored. Provided that a temperature of the laser-irradiated portions is 40° C, and when being drawn by the hysteresis loop of 32, the information is written in a state 37 against the state-background of the state 40. The sufficient polarizing inversion of the liquid crystal molecules is not performed in the state 37, so that the information written stands unstable. The liquid crystal molecules take the state 37 optically, hence they take either of the state 40 or the state 38. Therefore it is impossible to acquire sufficient writing characteristic.

Fig. 4 shows the applied voltage-light reflectivity characteristic of the first embodiment when applying voltage superposing an AC rectangular wave

52 to a low frequency triangular wave 51. Fig. 5 shows an applied voltage waveform diagram at that time.

The numeral 41 in the Fig. 4 indicates a voltage-light reflectivity characteristic when applying a triangular wave of 0.1Hz and 20Vp-p to the light valve in the first embodiment at room temperature. The numeral 42 indicates a voltage-light reflectivity characteristic when superposing a rectangular wave of 0.5KHz and 15Vp-p to the rectangular wave of 0.1Hz and 20Vp-p at room temperature.

As can be clarified from Fig. 4, a width of bistability is larger in superposing the AC wave than in non-superposing the AC wave. It can be comprehended that a larger margin is taken during the writing process. It has proven from an experiment carried out by the present inventor that the effects exist within a range of 1KHz to 50KHz.

Then, the driving method will be explained.

Fig. 6 shows a driving voltage waveform supplied to the first embodiment.

The driving voltage waveform has a presetting region 53 and a writing region 54. The presetting region 53 supplies a DC voltage V1 exceeding the first threshold voltage $Vth_1$34 shown in Fig. 3 and achieves a uniform alignment of the liquid crystal molecules all over the surface of the light valve.

So that the light valve holds to one stable state of bistable state. The writing region 54 supplies a DC voltage V2 smaller than the second threshold voltage $Vth_2$35 shown in Fig. 3 and irradiates the laser beams 9. The laser beams 9, which is generated by a semiconductor laser having an output of 10mW which has a luminescent wavelength of 780 nm, are contracted down to 12 µm x 8 µm to effect the writing process, in consequence of which writing of a spot substantially identical with a beam diameter can be attained at 5 µsec.

The reason why the writing speed is outstandingly improved as compared with the prior art laser writing is, it can be considered, that the liquid crystal layer according to the present invention is as thin as 1.5 to 2.0 µm that is approximately 1/10 the thickness in the prior art, and a small amount of thermal energy needed may suffice for rising the temperature of the liquid crystal layer. The heat absorbed by the laser beam absorbing layer is transferred to the thin liquid crystal layer at a very high efficiency, thereby making it possible to minimize a sideways thermal diffusion. It has proven that a resolution is also remarkable ameliorated. According to the experiment made by the present inventor, writing of a hyperfine spot of 3 µm x 2 µm has successfully been performed. Where a large output laser of He-Ne, Ar or the like is utilized, the writing process at a speed as high as 100 µsec per pixel can, it seems, be attained.

Now, a second embodiment will be explained.

A pair of rear and front transparent substrates 1a, 1b are made of glass substrates. The rear transparent substrate 1a is formed on its inner surface the transparent electrode layer 2a of ITO, the laser beam absorbing layer 3 compressed of a hydrogenated amorphous silicon having a thickness of 1.0 µm and the light reflecting layer 4 comprised of Al having a thickness of 1000Å. The front transparent substrate 1b is formed on its inner surface the transparent electrode layer 2b of ITO.

Polyfumaric acid di-isopropyl(PDPF) is coated over the transparent electrode layers 2a, 2b and is baked. Thereafter, a rubbing process is performed to form the alignment layers 5a, 5b.

The hydrogenated amorphous silicon(a-Si:H) can be fomed firstly on the electrode layer 2a by electric spark decomposition of $SiF_4$ gas added with 1000ppm of $BH_3$ gas.

The pair of substrates 1a, 1b are coupled to each other with facing the respective alignment layers 5a, 5b to each other by means of the outer periphery seal 7 composed of adhesive containing silica orbs having diameter of about 1.5 µm effective to control the spacing between the pair of substrates.

The ferroelectric liquid crystal composition CS-1014(chisso Petroleum Chemical Co., Ltd) is introduced into the spacing to form the liquid crystal layer 6.

The light valve above mentioned has the applied voltage-light reflectivity characteristic shown in Fig. 3.

The liquid crystal molecules are achieved a uniform alignment all over the surface of the light valve by applying a DC voltage exceeding the first threshold voltage $Vth_1$. So that the light valve holds to one stable state of bistable state. Thereafter, the light valve is applied a DC voltage smaller than the second threshold voltage $Vth_2$ and coincidently the laser beams 9, which is generated by a semiconductor laser having an output of 30mW which has a luminescent wavelength of 830nm, are contracted down to 20 µm x 16 µm to effect the writing process and are irradiated, in consequence of which writing of a spot of 18 µm x 14 µm can be attained at 5 µsec.

The thus written image information can be read out by irradiating the projection light 10. The projection light 10 of linear polarization which passes through a polarizer passes the liquid crystal layer 6, is reflected by the light reflecting layer 4, passes a analyzer and projects the written image information on a screen.

Where polarizing plate each having a polarization degree of 99.9% and a uint transmissivity.of 38% are employed for the polarizer and the analyzer, the light valve gets a contrast ratio of 400 : 1

or more in two stable states of the bistable state.

The ferroelectric liquid crystal layer which is composed of mixture composition of pyrimidine-derivative chiral smectic liquid crystal materials, or composed of mixture composition of ester type chiral smectic liquid crystal materials and pyrimidine-derivative chiral smectic liquid crystal materials can be utilized.

The lignment layer composed of polyisopropyl 1, 1, 2, 2 tetrahydropurfleorodecyl fumarate (PFDF) can be utilized.

According to the present invention, the light reflectivity is unable to assume a half tone because of its threshold characteristic and bistable memory property but takes 1 or 0. The image written is, however, semipermanently held, as far as it does not undergo an application of a voltage higher than the threshold voltage or an intensive pressure. The voltage is, after forming the image, made open and then remeasured after three days have passed. As a result, there appears almost no variation in the contrast ratio, and it is confirmed that a highly excellent memory property is provided.

Lastly, the various application of inventive light valve will be explained hereinbelow. Fig. 7 shows a schematic structural view of the digital color laser printer provided with the inventive laser writing type liquid crystal light valves. Three light valves 61a, 61b and 61c according to the present invention are disposed on a turn table. A laser scanner 62 scans a laser beam to write three color image components of red, green and blue color tones, respectively onto the corresponding three light valves 61a, 61b, and 61c. Then a projecting optical system 63 irradiates the respective light valves 61a, 61b and 61c with three different wavelengths of lights, sequentially, which are produced by means of three color filters corresponding to the three primary colors of red, green and blue, to thereby project sequentially the three color image components on a medium 64.

As shown in Fig. 8 the medium 64 is comprised of a base 72 dispersely coated with three different kinds of microcapsules 71a, 71b, 71c. The three kinds of microcapsules 71a, 71b and 71c are cured in response to the three different wavelengths of projecting lights, and contain therein three different leuco dyes of yellow Y, cyan C and magenta M, respectively. After selectively curing the micocapsules, the medium 64 is pressed by means of a roller 66 together with a receiver sheet 65 coated with color former to thereby develop the composite color image on the receiver sheet 65. By applying the inventive light valves to such digital color laser printer, the color image of high quality can be reproduced at short processing time.

In addition, by arranging a screen in place of the medium 64 and by projecting the three color image components concurrently on the screen, a color projecter of high quality can be obtained.

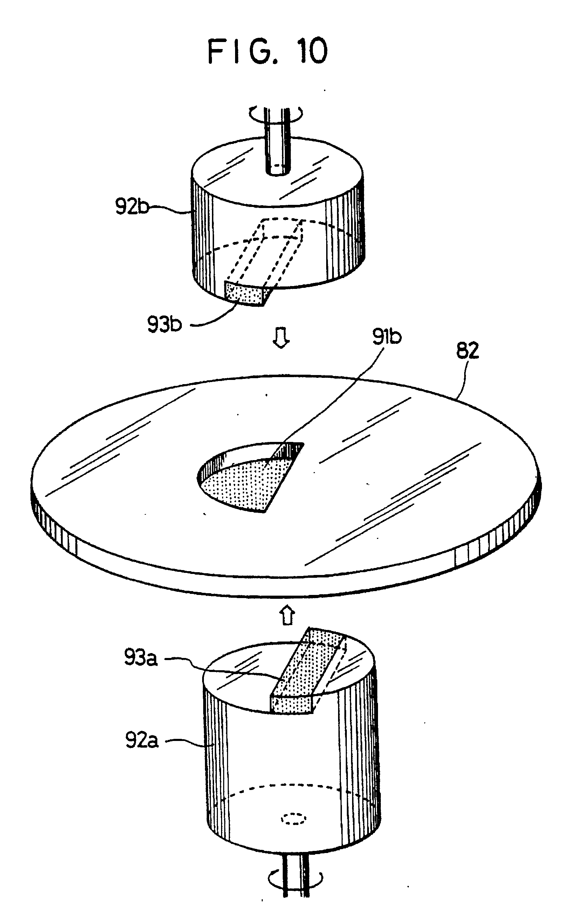

Fig. 9 is a schematic diagram showing an optical disc memory device provided with an optical memory disc composed of the inventive light valve cell, and Fig. 10 is an enlarged view of central portion of the optical disc memory device shown in Fig. 9. As shown in Fig. 9, an optical memory disc 82 has a structure similar to that of the light valve cell shown in Fig. 1. Further, as similar the structure of conventional compact disc pick-up, a reading optical system 83 added with a pair of polarizer and analyzer is provided on the front side of memory disc 82 which is not arranged with a laser beam absorbing layer 3 of the memory portions 81a and 81b of memory disc 82, and a writing optical system 80 utilizing a semiconductor laser is provided on the rear side of memory disc 82 which is arranged with the laser beam absorbing layer 3.

As shown in Fig. 9, a pair of electrode layers are exposed at their contact portions 91a and 91b within a central opening of the disc 82. A pair of axially separated rotation shafts 92a and 92b are made contact with the respective contact portions 93a and 93b at their respective electrode pads 91a and 91b arranged at opposed end portions of the respective shafts 92a and 92b so as to apply bias voltage across the pair of electrode layer in the memory disc 82 during the rotation thereof. The respective optical systems 80 and 83 are scanned radially of the memory disc 82 to effect the writing and reading of data to and from the memory disc.

The optical memory cell according to the present invention can be formed in a card shape, and writing operation can be effected by the scanning of laser beam with a poligon mirror or galvano mirror. Such type of the optical memory device has also high data memory density and high access speed, and can effect repeatedly erasing and rewriting operation. Moreover, the device does not require any backup power supply due to its optical bistability.

As described above, according to the present invention, the light valve cell has great optical contrast, fast response speed effective to enable fast writing operation by means of laser beam, and high resolution. In view of these features, the inventive light valve can be used as an incoherent-coherent converter having a large effective area with fast processing, and as an optical memory having great S/N ratio, being addressable at short period of time with laser beam, being accessable at high speed with high memory data density, being operable to carry out erase and rewriting of data, and being driveable without a backup power supply due to its optical bistability. Accordingly, the inventive light

valve cell can be applicable for an intermediate recording medium of optical printer, image display device, optical shutter, coherent light correlation system and other image processing device so as to considerably improve the performance of these devices and to broaden the application field of these devices.

## Claims

1. A liquid crystal device for writing an image information by irradiating laser beams, the device comprising:
a liquid crystal layer composed of ferroelectric liquid crystal composition having bistable state of two optically different stable states switchable therebetween by applied voltage and having said bistable state reduced threshold voltage values when said laser beams are irradiated;
a pair of front and rear alignment layers sandwitching therebetween said liquid crystal layer to establish said optically diffelent stable states in said liquid crystal layer;
a laser beam absorbing layer for absorbing thurmal energy of said laser beams irradiated, for heating up said liquid crystal layer by said absorbed thurmal energy and disposed on said rear alignment layer;
a front electrode layer adjacent to said front alignment layer;
a rear electrode layer disposed on said laser beam absorbing layer and cooperative with said front electrode layer to apply said applied voltage across said liquid crystal layer to thereby effect the switching between said two stable states; and
a pair of front and rear transparent substrates for sandwitching therebetween said liquid crystal layer.

2. A liquid crystal device according to claim 1; including an optically reflecting layer placed between said rear alignment layer and said laser beam absorbing layer.

3. A method for driving a liquid crystal device having a laser beam absorbing layer and a ferroelectric liquid crystal layer, having two optically different stable states switchable therebetween by applied voltage, having first and second threshold voltages depended on temperature of said liquid crystal layer and switchable between said two stable states, the method comprising the steps of

A. presetting said liquid crystal device to one stable state of said two stable states by applying a DC voltage greater than said first threshold voltage value which is a voltage value effective to switch from the other stable state to one stable state, and

B. writing an image into said liquid crystal device by irradiating laser beams while applying a DC voltage, which has the opposite polarity to said presetting DC voltage and a magnitude greater than a threshold voltage value of the portion of said liquid crystal layer irradiated said laser beams and smaller than said second threshold voltage value effective to switch said one stable state to said other stable state.

FIG. 1

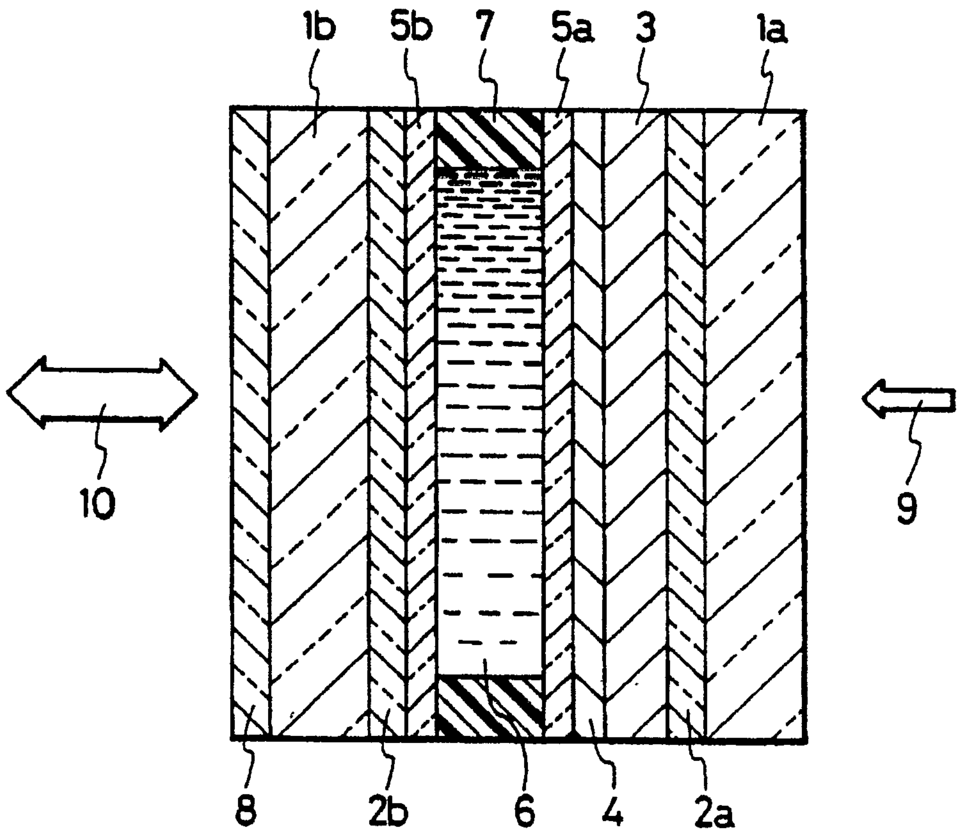


FIG. 2

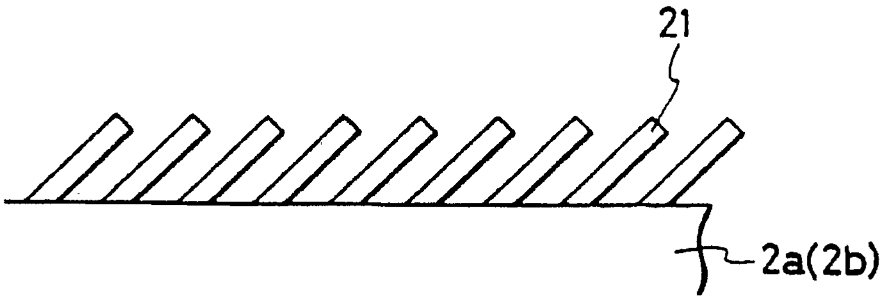

FIG. 3

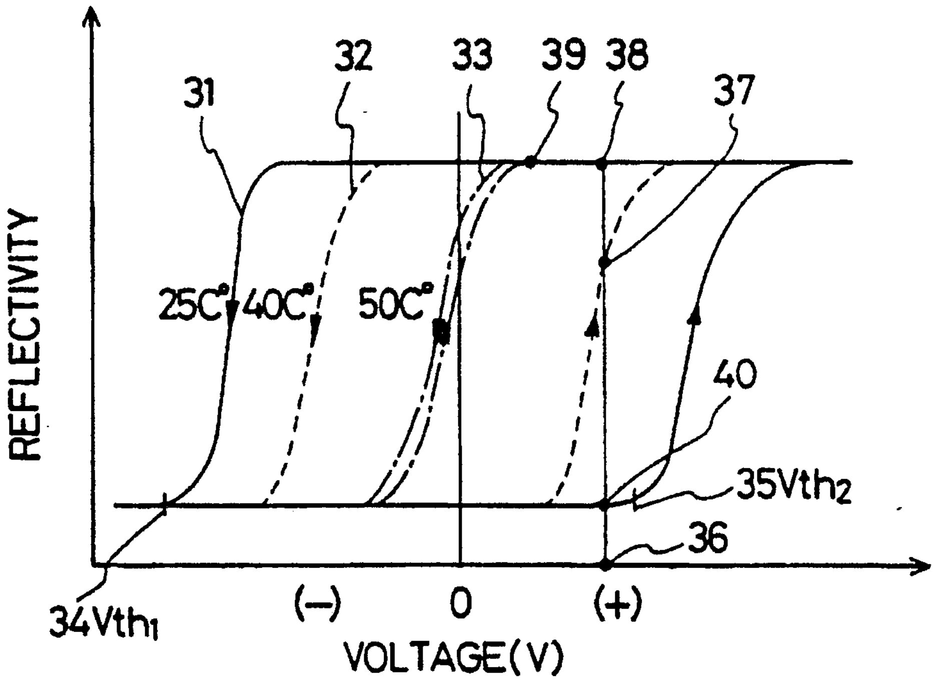
31
32
33
39
38
37
REFLECTIVITY
25C°
40C°
50C°
40
35Vth2
36
34Vth1
(−)
0
(+)
VOLTAGE(V)

FIG. 4

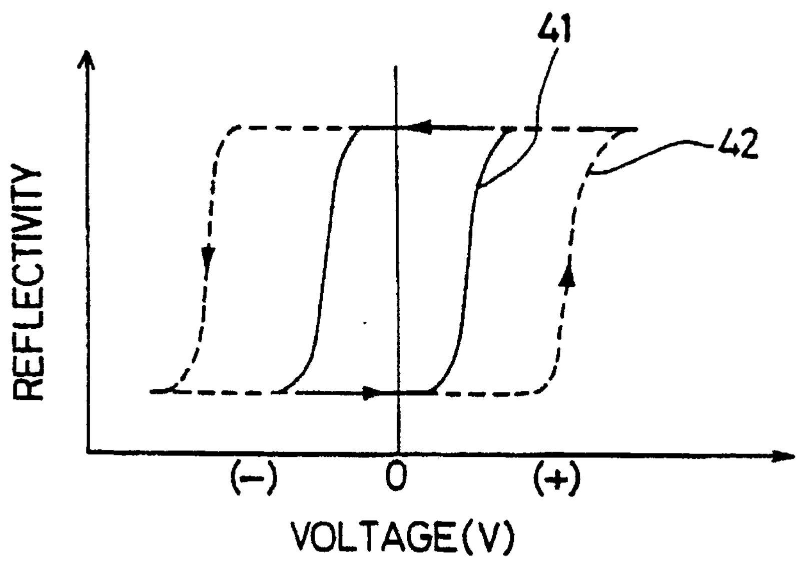
41
42
REFLECTIVITY
(−)
0
(+)
VOLTAGE(V)

FIG. 5

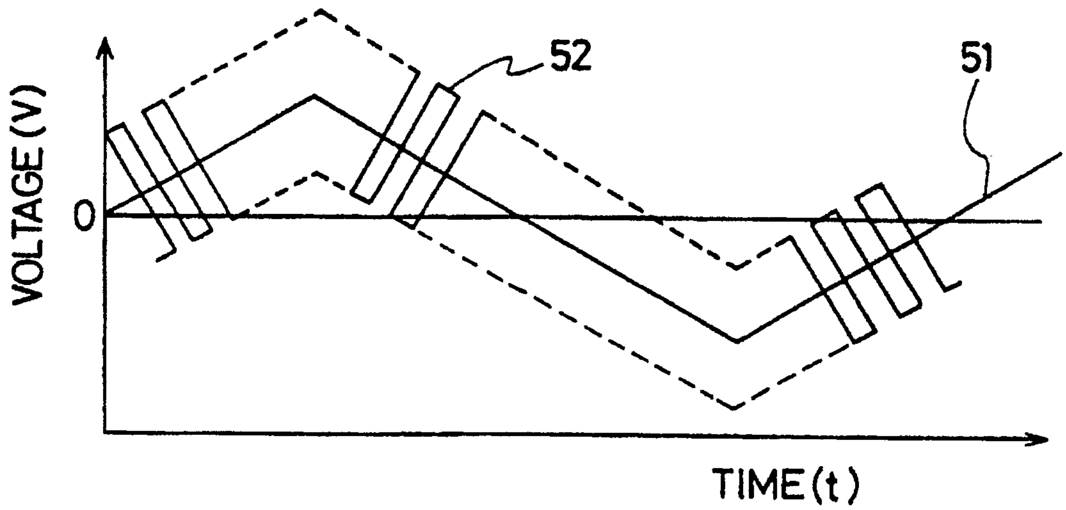


FIG. 6

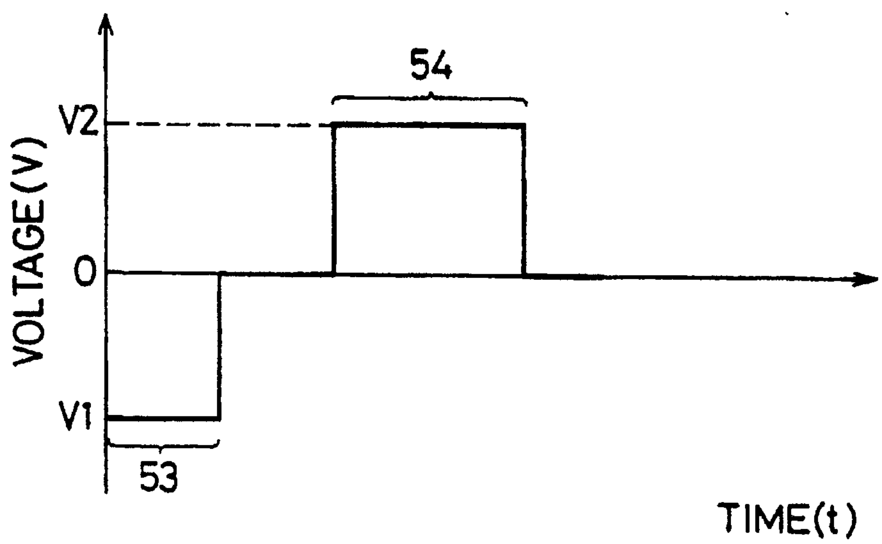

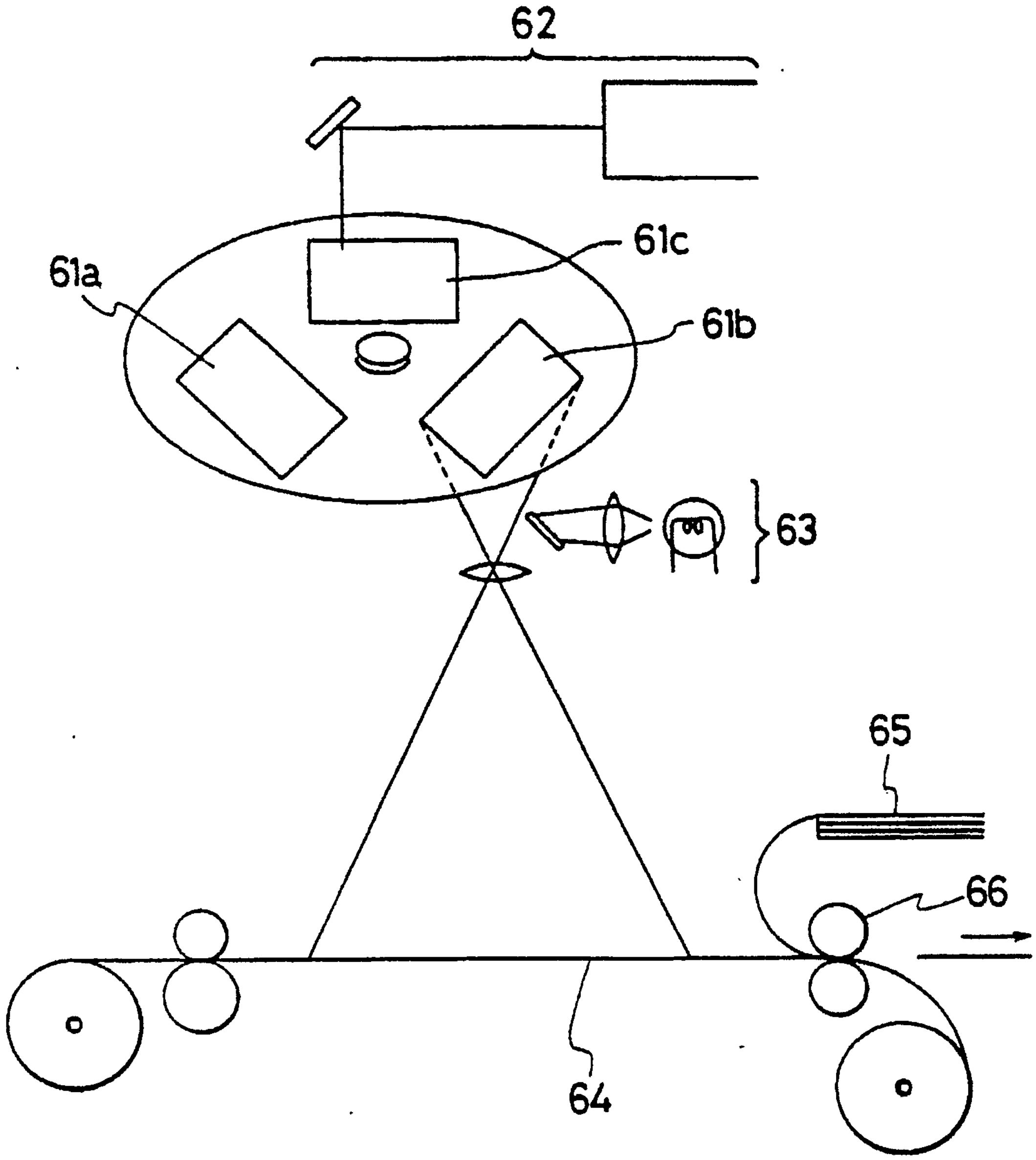
62
61c
61a
61b
63
65
66
64

FIG. 8

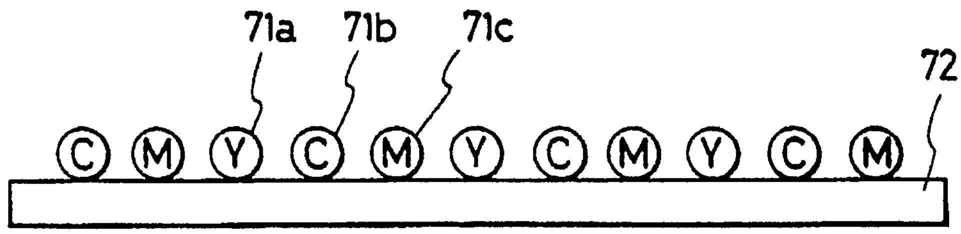
71a
71b
71c
72
C
M
Y
C
M
Y
C
M
Y
C
M

FIG. 9

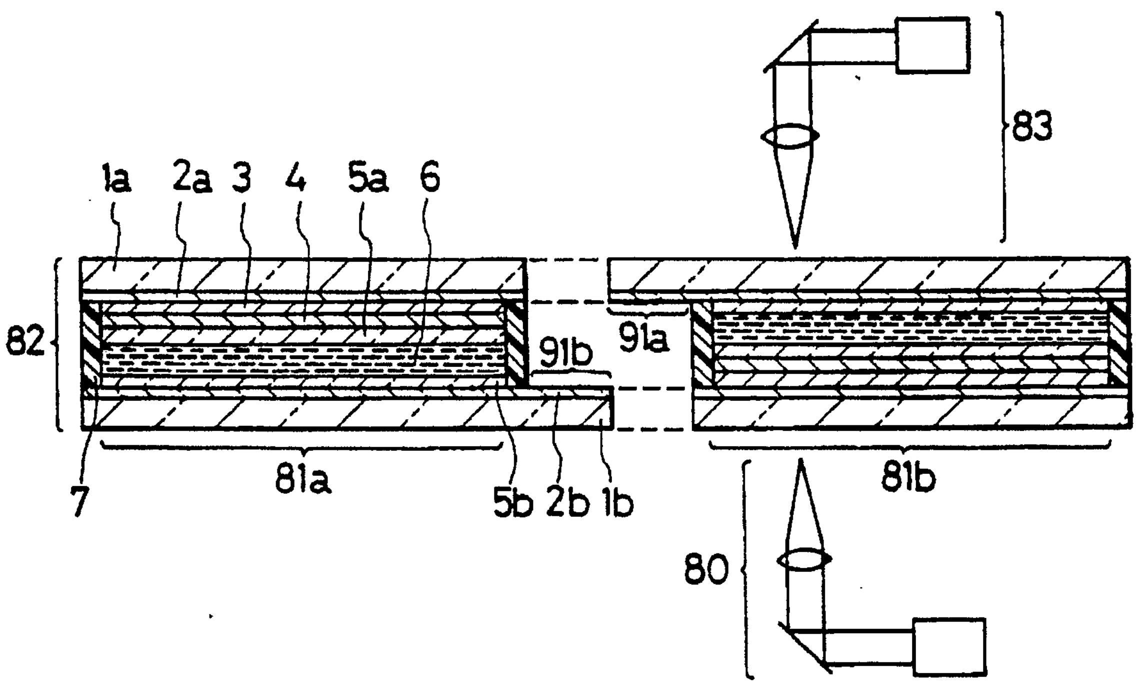
1a
2a
3
4
5a
6
82
91b
91a
83
7
81a
5b
2b
1b
81b
80

FIG. 10